# EUROPEAN PATENT APPLICATION

(11) **EP 2 991 190 A1**
(43) Date of publication of application: **02.03.2016**
(21) Application number: 15737949.6
(22) Date of filing: 20.05.2015
(51) Int. Cl.: H02J 7/00

(54) **ELECTRIC ENERGY GENERATION DEVICE**

(30) Priority: 21.05.2014 HK 14104771
(71) Applicant: Chan, Shek Him, Sam Shing Estate, Tuen Mun, N.T. Hong Kong (CN)
(72) Inventor: Chan, Shek Him, Sam Shing Estate, Tuen Mun, N.T. Hong Kong (CN)
(74) Representative: Izquierdo Blanco, Maria Alicia
(86) International application number: PCT/CN2015/079395
(87) International publication number: WO 2015/176661

(57) **Abstract**

The present invention discloses an electric energy generation device, including: a battery module having initial quantity of electricity; a conversion module connected to the battery module and configured to convert the output voltage of the battery module into alternate high and low level signals; a one-way switching-on module; and at least one coil assembly, wherein the coil assembly includes a first coil and a second coil which are close, and the number of turns of the second coil is greater than the number of turns of the first coil, the two ends of the first coil are connected to the conversion module, the first end of the second coil is connected to the first end of the battery module through the one-way switching-on module, and the second end of the second coil is connected to the second end of the battery module. Through implementing the technical solution, the electric energy generation device can unremittingly accumulate the quantity of electric energy induced by the second coil on the battery module, so that other electric devices can be operated after the battery module is charged; moreover, the electric energy generation device does not need any external energy source.

## Description

### TECHNICAL FIELD

The present invention relates to the field of electricity, and more particularly, to an electric energy generation device.

### BACKGROUND

A generator is normally used to produce electric energy at present. However, the generator requires continuously and unremittingly inputting of external sources of energy in other forms. Nowadays, people also seek electric energy sources through different practicing manners for daily use.

### SUMMARY

A technical problem to be solved by the present invention is to provide an electric energy generation device without requiring an external source of energy.

To solve the technical problem, the present invention employs a technical scheme as follows: constructing an electric energy generation device, including:
a battery module having initial quantity of electricity;
a conversion module connected to the battery module and configured to convert the output voltage of the battery module into alternate high and low level signals;
a one-way switching-on module; and
at least one coil assembly, wherein the coil assembly includes a first coil and a second coil which are close, and the number of turns of the second coil is greater than the number of turns of the first coil, the two ends of the first coil are connected to the conversion module, the first end of the second coil is connected to the first end of the battery module through the one-way switching-on module, and the second end of the second coil is connected to the second end of the battery module.

The electric energy generation device according to the present invention further includes:
an indicator lamp connected between the two ends of the second coil.

In the electric energy generation device according to the present invention, the indicator lamp is an LED lamp.

In the electric energy generation device according to the present invention, the conversion module is an NAND gate or a JK trigger.

In the electric energy generation device according to the present invention, the one-way switching-on module is a diode rectifier bridge; moreover, the two input ends of the diode rectifier bridge are connected, and the two output ends of the diode rectifier bridge are connected.

In the electric energy generation device according to the present invention, the first coil and the second coil are respectively copper coils.

In the electric energy generation device according to claim 1, the electric energy generation device further includes a switch module connected between the battery module and the conversion module.

Through implementing the technical solution, the electric energy generation device can unremittingly accumulate the quantity of electric energy induced by the second coil on the battery module, so that other electric devices can be operated after the battery module is charged; moreover, the electric energy generation device does not need any external energy source.

### BRIEF DESCRIPTION OF THE DRAWINGS

The present invention will be further described hereinafter with reference to the drawings and embodiments, wherein in the drawings:
Fig. 1 is a logic structure chart of a first embodiment of an electric energy generation device according to the present invention; and
Fig. 2 is a logic structure chart of a second embodiment of the electric energy generation device according to the present invention.

### DETAILED DESCRIPTION

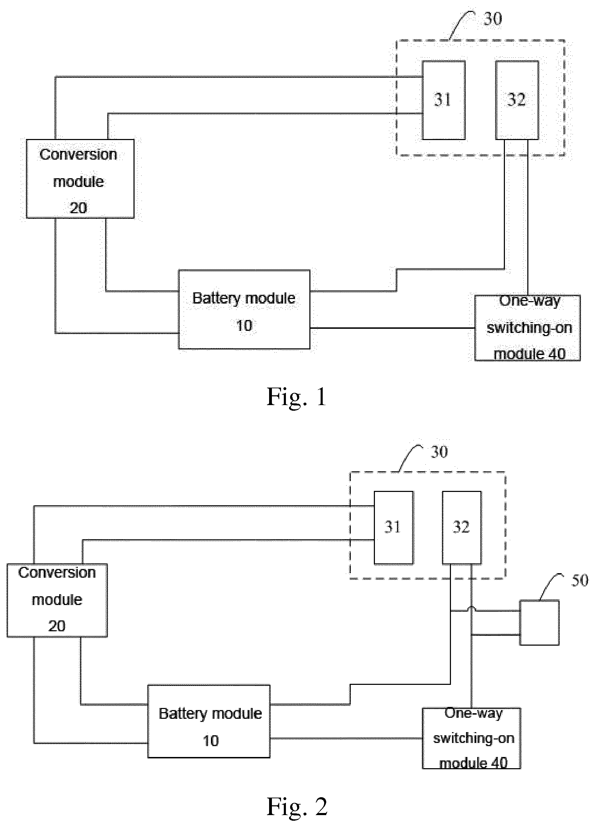

Fig. 1 is a logic structure chart of a first embodiment of the electric energy generation device according to the present invention. The electric energy generation device according to the embodiment includes a battery module 10, a conversion module 20, a coil assembly 30, and a one-way switching-on module 40, wherein the battery module 10 has an initial quantity of electricity, for example, a half of the full quantity of electricity. The conversion module 20 is configured to convert the output voltage of the battery module 10 into alternate high and low level signals. The coil assembly 30 includes a first coil 31 and a second coil 32 which are close, and the number of turns of the second coil 32 is greater than the number of turns of the first coil 31, the two ends of the first coil 31 are connected to the conversion module 20, the first end of the second coil 32 is connected to the first end of the battery module 10 through the one-way switching-on module 40, and the second end of the second coil 32 is connected to the second end of the battery module 10. It should be noted here although the embodiment only illustrates one coil assembly, it should be understood that more coil assemblies can be set in other embodiments.

The working principle of the electric energy generation device is explained hereinafter: the battery module 10 has an initial quantity of electricity and outputs the initial quantity of electricity to the conversion module 20. The conversion module 20 converts a direct current voltage outputted by the battery module 10 into alternate high and low level signals, and electrifies the first coil 31, so that changed magnetic fields are generated surrounding the first coil 31. In this way, the second coil 32 induces the voltage in the changed magnetic fields, and the voltage induced is larger when the number of turns of the second coil 32 is more. The battery module 10 is charged by the voltage induced through the one-way switching-on module 40. The one-way switching-on module 40 can prevent the current of the battery module 10 from reversely flowing into the second coil 32. Therefore, the electric energy generation device can unremittingly accumulate the quantity of electric energy induced by the second coil on the battery module 10, so that other electric devices can be operated after the battery module 10 is charged; moreover, the electric energy generation device does not need any external energy source.

Fig. 2 is a logic structure chart of a second embodiment of the electric energy generation device according to the present invention. Based on the foregoing embodiment, the electric energy generation device according to the embodiment may further include an indicator lamp 50, for example, an LED lamp. The indicator lamp 50 is connected between the two ends of the second coil 32, and emits light when the second coil 32 induces a voltage.

Based on the foregoing embodiment, the electric energy generation device according to the present invention may further include a switch module, which is connected between the battery module 10 and the conversion module 20, and is configured to open or close the electric energy generation device.

Moreover, the conversion module 20 can be a NAND gate or JK trigger preferably, for example, an integrated chip under the model of 4023 from Philips Corporation is selected as the NAND gate. A diode rectifier bridge may be selected as the one-way switching-on module 40; moreover, the two input ends of the diode rectifier bridge are connected and together served as the input end of the one-way switching-on module 40, and the two output ends of the diode rectifier bridge are connected and together served as the output end of the one-way switching-on module 40. Of course, a diode may also be selected as the one-way switching-on module 40 in case of low requirements on delay. The first coil 31 and the second coil 32 are respectively copper coils, which have higher electroconductibility and lower cost.

The above descriptions are merely preferred embodiments of the present invention, but are not intended to limit the present invention. For those skilled in the art, the present invention may have various alternations and modifications. Any modification, equivalent replacement, improvement and the like, made within the spirit and principle of the present invention, shall all fall within the scope of the claims of the present invention.

## Claims

1. An electric energy generation device, comprising:
a battery module having initial quantity of electricity;
a conversion module connected to the battery module and configured to convert the output voltage of the battery module into alternate high and low level signals;
a one-way switching-on module; and
at least one coil assembly, wherein the coil assembly comprises a first coil and a second coil which are close, and the number of turns of the second coil is greater than the number of turns of the first coil, the two ends of the first coil are connected to the conversion module, the first end of the second coil is connected to the first end of the battery module through the one-way switching-on module, and the second end of the second coil is connected to the second end of the battery module.

2. The electric energy generation device according to claim 1, wherein the method further comprises:
an indicator lamp connected between the two ends of the second coil.

3. The electric energy generation device according to claim 2, wherein the indicator lamp is an LED lamp.

4. The electric energy generation device according to claim 1, wherein the conversion module is an NAND gate or a JK trigger.

5. The electric energy generation device according to claim 1, wherein the one-way switching-on module is a diode rectifier bridge; moreover, the two input ends of the diode rectifier bridge are connected, and the two output ends of the diode rectifier bridge are connected.

6. The electric energy generation device according to claim 1, wherein the first coil and the second coil are respectively copper coils.

7. The electric energy generation device according to claim 1, wherein the electric energy generation device further comprises a switch module connected between the battery module and the conversion module.
